# EUROPEAN PATENT SPECIFICATION

(11) **EP 2 506 561 B1**
(45) Date of publication and mention of the grant of the patent: **20.05.2015**
(21) Application number: 09846419.1
(22) Date of filing: 28.12.2009
(51) Int. Cl.: H04N 21/2187, H04N 21/2747

(54) **NETWORK-WIDE STORING AND DISPATCHING METHOD AND SYSTEM FOR NETWORK TV**
NETZWERKWEITES SPEICHERUNGS- UND VERSANDVERFAHREN UND SYSTEM FÜR NETZWERK-TV
PROCÉDÉ ET SYSTÈME DE STOCKAGE ET DISTRIBUTION SUR L ENSEMBLE DU RÉSEAU POUR LA TÉLÉVISION EN RÉSEAU

(30) Priority: 24.11.2009 CN 200910109842
(43) Date of publication of application: 03.10.2012
(73) Proprietor: ZTE Corporation, Shenzhen, Guangdong 518057 (CN)
(72) Inventor: WANG, Wei, Guangdong 518057 (CN)
(74) Representative: Hoyle, Benjamin James
(86) International application number: PCT/CN2009/076156
(87) International publication number: WO 2010/148620

(56) References cited:
- WO-A1-02/15576
- CN-A- 1 529 508
- CN-A- 1 964 481
- CN-A- 101 009 581
- CN-A- 101 420 603
- US-A1- 2007 107 011
- US-A1- 2008 292 281

## Description

### Field of the Invention

This disclosure relates to the field of multimedia communication based on the IP network, and in particular to a network-wide storing and scheduling method and a network-wide storing and scheduling system for realizing live program time-shifting playback in the Internet Protocol Television (IPTV).

### Background of the Invention

With the development of IP network transmission technology, IPTV relies on a Content Delivery Network (CDN) constructed on the IP network, so that media data is stored and scheduled with higher efficiency. Thus, it becomes more and more popular. It is always a research subject in the field of data transmission about how to improve the network-wide node service capability of the CDN, increase the stability, reliability and flexibility of media code stream data packet transmission.

IPTV refers to television broadcast service based on the IP network. The IPTV provides video content services with audio visual content as the main service, including live broadcast service, on-demand service, carousel service, time shifting service, playback service, etc. TV time-shifting playback service is a basic service of the IPTV and provides a freer watching mode for a user to watch TV: the user can watch their favorite TV programs selectively at any time, and thus the user experience is greatly improved and the restriction of traditional TV on a user is avoided.

Due to the characteristic of TV time-shifting playback, it is needed to record and store the live TV programs in the CDN. At present, there are three common recording and storing methods.

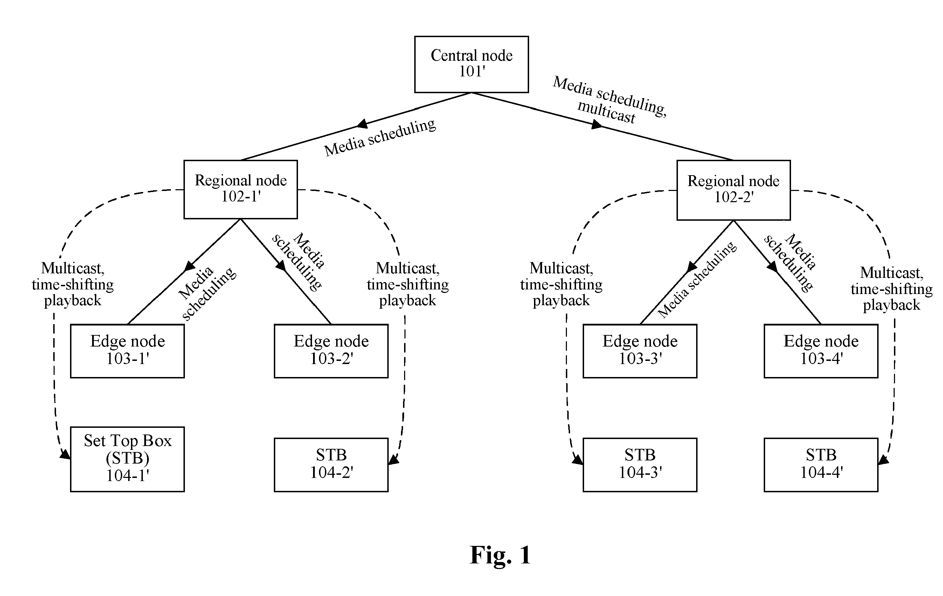

First: it is recorded and stored at the parent nodes of the CDN, wherein the time-shifting playback service of the user is realized on these node; as shown in Fig. 1, the time-shifting playback is recorded and stored on a central node 101', a regional node 102-1' and a regional node 102-2', and the user of a Set Top Box (STB) 104' serving as a client terminal directly watches the recorded content on these nodes.

The method above has an advantage of occupying less storage space but has the following defects:
when there are a large number of users using the time-shifting playback service, the capability of the regional node 102' (or central node 101') is largely occupied by the time-shifting playback service. Thus, the content scheduling capability provided to an edge node 103' by the regional node 102' is reduced. Consequently, the on-demand service of the user is impacted and the on-demand service of the user would be scheduled to a regional node to form a cycle. Therefore, the service provided for the user becomes worse and the experience of the user is impacted.

A large number of time-shifting playback services are served on the regional node 102' (or central node 101') and the network traffic of these services would cause a shock on the network of this region to influence the content scheduling among CDN nodes and thereby influence the experience of the user.

Second: it is recorded and stored at the edge nodes of the CDN, and the time-shifting playback service of the user is scattered to the edge nodes.

This method has advantages of good distribution of user services and good experience, but has defects that the edge node occupies a large storage space and the total cost of the CDN network is increased.

Third: similar to the first method, live broadcast code stream is stored on the central node and the regional node; on the recording node, the live broadcast code stream is segmented into different files to store according to a fixed duration, and then the edge node, the regional node and the central node perform scheduling using the media files with a fixed duration among themselves.

This method has advantages that the storage space occupied is less and the user service adopts the media file scheduling with a fixed duration among nodes, but has defects that recording and storage can not be performed according to TV programs, the scheduling granularity is big when performing scheduling based on the media files with a fixed duration, and thus the edge node storage and the network bandwidth are greatly wasted.

WO 02/15576 A1 describes a network for distributing broadband video content from its origination point to end users using a system of video servers, video storage devices, video caches and a broadband transmission network. Video material is initially received from content providers, encoded using a compression algorithm, and stored at a centralized location. Depending on the projected frequency of viewing of the content, it either remains stored at the centralized location for less frequently viewed content, or the projected frequently viewed content is proactively transmitted to storage systems located near the edge of the network close to the end users.

### Summary of the Invention

The disclosure provides a network-wide storing and scheduling method and a network-wide storing and scheduling system for realizing seamless scheduling and flexible adjustment of storage space in IPTV live time-shifting playback.

The present invention is defined by the appended claims.

Compared with the conventional art, this disclosure has the following advantages: 1) in the network-wide storing method for IPTV in this disclosure, it adds an identifier of a program to which a media code stream data packet belongs and a storage identifier of the media code stream data packet into the media code stream data packet and stores the media code stream data to related nodes in the CDN in alignment, wherein as an implementation mode, the identifier of the program to which the media code stream data packet belongs is a program label, a live broadcast media code stream sending server adds the program label and an offset label of the media code stream into an extension domain of a live broadcast media code stream Real Time Protocol (RTP) packet according to the live program list, to segment the live broadcast code stream according to the programs, and store the live broadcast code stream as the corresponding program media file on the recording node; it is guaranteed that the media data of each recording node is stored in alignment distinguished by the program label; the distributed aligned storage mode and the scheduling by degrees optimize the node service capability of the CDN, rationally utilize the current network resources and the node storage, and realize the storage of the live broadcast code stream in alignment by each recording node according to the identifier of the program to which the media code stream data packet belongs; and compared with the traditional manner which segments the live broadcast code stream according to a fixed duration, this disclosure can provide better service quality of live time-shifting playback and improves the experience effect for the user; 2) in the network-wide scheduling method for IPTV in this disclosure, a client terminal partially schedules and requests media code stream data from an edge node; for the media code stream data not stored locally, the edge node schedules and requests from a parent node, that is, a recording node, and schedules the media data deployed in the entire network in alignment by degrees, so as to realize the seamless scheduling based on media data segment among any nodes; 3) in the network-wide storing and scheduling system for IPTV in this disclosure, in order to realize the aligned storage and seamless scheduling of media code stream data, for the media code stream data packet lost during transmission, the recording node fills full zero data in the corresponding position of the recording file; in this way, the storage of the media data on each recording node is aligned, with the same order as the transmission order of the media data in the original live broadcast code stream and the same size as the storage size of the original live broadcast code stream in the condition of not losing packet; and the seamless scheduling based on media data segment among any nodes is realized; 4) in the network-wide storing and scheduling system for IPTV in this disclosure, the preset identifier of the program to which the media code stream data packet belongs and the preset storage identifier of the media code stream data packet not only realize aligned storage and seamless scheduling, but also can accurately locate the media data segment; some media data segment can be deleted after being stored in the node for some time according to the programs or the time period in the program, to guarantee that the storage space of the node is not excessively occupied and to rationally utilize the current node storage resource.

### Brief Description of the Drawings

Fig. 1 illustrates an implementation block diagram of adopting a regional node to store time-shifting playback recording in the related art;
Fig. 2 shows a diagram of a program label and a storage offset label in an extension of an RTP protocol according to the embodiments of this disclosure;
Fig. 3 illustrates an implementation block diagram of adopting an edge node to store partial time-shifting playback recording according to the embodiments of this disclosure;
Fig. 4 shows a flowchart of multicast transmission and time-shifting playback recording of the media code stream with a program label and a storage offset label according to the embodiments of this disclosure; and
Fig. 5 shows a flowchart of time-shifting playback watching process of a client terminal according to the embodiments of this disclosure.

### Detailed Description of the Embodiments

This disclosure is further illustrated below in detail by embodiments in conjunction with drawings.

The network-wide storing and scheduling system for IPTV involved in this disclosure improves the storage mode and the data scheduling mode respectively.

In the above, the improvement of the storage mode lies in: adding an identifier of a program to which a media code stream data packet belongs and a storage identifier of the media code stream data packet into the media code stream data packet, so as to realize the aligned storage which distinguishes the recording file by the identifier of the program and indicates the specific storage location of the data packet by the storage identifier of the media code stream data packet. In the embodiment, the identifier of the program to which the media code stream data packet belongs is a program label A and the storage identifier of the media code stream data packet is a storage offset label B. The setting of the program label A which is configured to distinguish the recording file and the setting of the storage offset label B which is configured to indicate the storage location enable the client terminal to realize the seamless scheduling on any media segment through an STB

The identifier of the program to which the media code stream data packet belongs in this disclosure is not only limited to the program label. The identifier of the program can be a time period or other predefined identifier, for example, the aligned storage in which the time period of 8:00 to 9:00 of a program is especially used for the time-shifting playback. The following introduction of the embodiment is only illustrated by taking the program label as an example.

The improvement of the scheduling mode lies in that: the system distributes and stores the live broadcast media code stream data in the recording node and the edge node of the CDN, wherein the recorded media code stream data is mainly stored in the recording node and the bottom edge node stores a part of the media data. For the locally not stored media data, the media data segment is seamlessly extracted from the recording node in a manner of scheduling by degrees.

The implementation is illustrated below in detail.

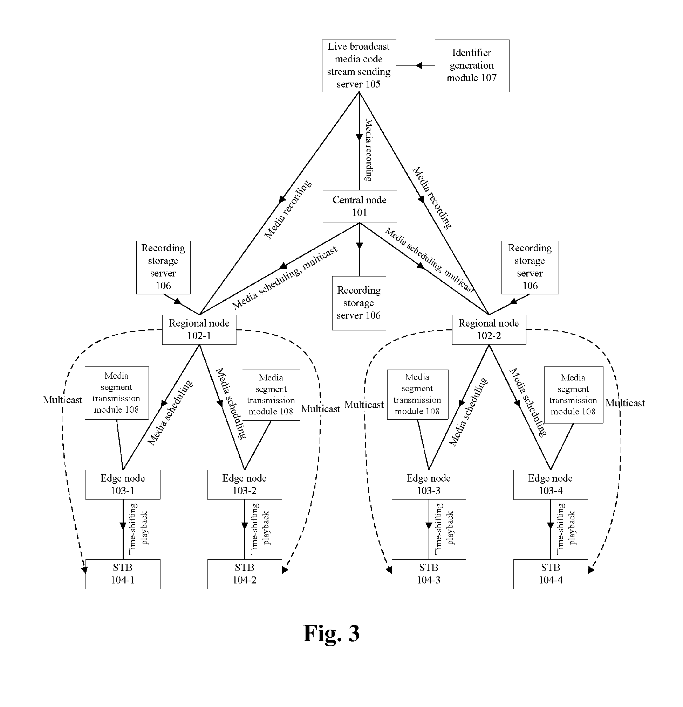

Referring to Fig. 3, the network-wide storing and scheduling system for IPTV comprises a central node 101, a regional node 102 and an edge node 103 of the CDN, wherein the central node 101, the regional nodes 102-1, 102-2 are the recording node of the embodiment. The system further comprises an STB 104 which serves as a client terminal, a live broadcast media code stream sending server 105 which provides media data for the recording node, and a recording storage server 106 which is set in the recording node. The modules above cooperate with each other to implement the embodiment of this disclosure.

The live broadcast media code stream sending server 105 comprises an identifier generation module 107 which is configured to generate an identifier of a program to which a media code stream data packet belongs and a storage identifier of the media code stream data packet.

The edge nodes 103-1 to 103-4 further comprise a media segment transmission module 108 which is configured to locate the media segment.

In the embodiment, the media data generated by the live broadcast media code stream sending server 105 adopts a distributed network-wide storage mode, wherein the media data is mainly stored in the recording node and partially stored in the edge node 103 to share the storage pressure of the recording node and reduce the CDN network transmission pressure.

The nodes composing the CDN comprise a central node 101, a regional node 102 and an edge node 103.

In the above, the central node 101 of the CDN stores all on-demand film sources and time-shifting playback records of the IPTV system, wherein the central node 101 can provide media data content for other nodes through the content scheduling among nodes.

The regional node 102 of the CDN stores a part of the on-demand film sources and time-shifting playback records of the IPTV system, wherein the regional node 102 provides media data content for the edge nodes under its charge through the content scheduling among nodes.

The edge node 103 of the CDN stores a few highly-demanded on-demand film sources and time-shifting playback records of the IPTV system, wherein the edge node 103 provides on-demand services for the STB user of the client terminal.

The live broadcast media code stream sending server 105 comprises an identifier generation module 107 which is configured to generate an identifier of a program to which a media code stream data packet belongs and a storage identifier of the media code stream data packet. And the recording node, the central node 101 and the regional node 102 respectively comprise a recording storage server 106.

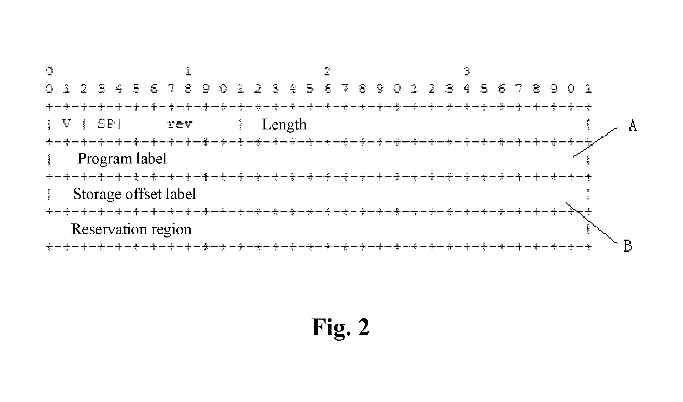

Referring to the diagram of the program label and the storage offset label shown in Fig. 2, the live broadcast media code stream sending server 105 sends the live broadcast code stream to the recording node in the CDN network in a manner of IP multicast packet, so as to provide media code stream for the time-shifting playback recording and the final user watching. During sending the media code stream data, the live broadcast media code stream sending server 105 segments the live broadcast code stream according to the program label A sent by the identifier generation module 107 and the program list. In addition, during the process of transmitting the same program code stream, according to the storage offset label B sent by the identifier generation module 107, each data packet is recorded in an extension domain of the RTP according to the media data size offset when the program is started, wherein aligned storage is performed during recording. The storage offset label is configured to guarantee that the same program live broadcast code stream stored in each node is aligned and consistent in size, so as to serve the scheduling based on media segment by the following nodes.

In the above, the identifier of the program to which the media code stream data packet belongs in this disclosure is not only limited to the program label. The identifier of the program can be a time period or other predefined identifier, for example, the aligned storage in which the time period of 8:00 to 9:00 of a program is especially used for the time-shifting playback. The following introduction of the embodiment is illustrated by only taking the program label as an example.

The identifier generation module 107, according to a live program list, adds a program label and a storage offset label into an extension domain of a live broadcast code stream RTP packet sent by the media code stream sending server 105, and segments the live broadcast code stream according to the programs. The recording node stores the data packet as the corresponding program media file according to the program label and the storage offset label, so as to guarantee that the media data of each recording node is stored in alignment, and to realize the seamless scheduling based on media data segment among any nodes. It is guaranteed that the media data of each recording node is stored in alignment distinguished by the program label. In this disclosure, the aligned storage of the live broadcast code stream based on the identifier of the program to which the media code stream data packet belongs can provide better service quality of live time-shifting playback and improve the experience effect for the user.

The recording node comprises a recording storage server 106, wherein the recording storage server 106 is configured to receive the media data sent by the live broadcast media code stream sending server 105. The recording storage server 106 stores the media data as different media files according to the program label, stores the media data into a storage device of the recording node in alignment according to the storage offset label, and provides media data for the time-shifting playback of the following final user.

For the STB 104 serving as the client terminal, the final user watches the on-demand film sources and the time-shifting playback recording provided by the IPTV system and implements other service functions through the STB.

During the process of the time-shifting playback service scheduling of the final user, a media segment transmission module 108 is further involved, wherein the media segment transmission module 108 converts the time-shifting playback time provided by the edge node 103 into a program label according to the program list, and then locates the corresponding media file according to the program label. The storage offset label generated by the live broadcast media code stream sending server 105 guarantees that the media data recording of each node is stored in alignment, and it is avoided that the same program is inconsistent in size when stored in various nodes. Thus the media segment transmission module 108 can locate the media segment among each node to assist the transmission of the media segment. The media data is downloaded from the regional node 102 or central node 101 to the edge node 103 and is stored in the edge node 103. The transmission process adopts a playing-while-dragging mode, and the edge node 103 synchronously sends the data to the STB 104 to provide the time-shifting playback function.

In the embodiment, the network-wide storing and scheduling system for IPTV adds an identifier of a program to which a media code stream data packet belongs and a storage identifier of the media code stream data packet into the media code stream data packet, segments the live broadcast code stream according to programs, and stores as the corresponding program media file on a recording node. It guarantees that the media data of each recording node is stored in alignment distinguished by the program label. Then, the media code stream data is stored into each node of the CDN in alignment. In the embodiment, the distributed aligned storage mode and the scheduling by degrees optimize the node service capability of the CDN, rationally utilize the current network resources and the node storage, provide better service quality of live time-shifting playback and improve the experience effect for the user.

In order to realize the seamless scheduling, for the media code stream data packet lost during the transmission process, the recording node fills full zero data in the corresponding position of the recording file to realize aligned storage, so that the media segment seamless scheduling is realized among each node of the CDN.

Compared with the conventional storage mode centralized in the central node and regional node or the storage mode scattered on the edge nodes, the storage of the media data in the embodiment adopts a compromise mode which not only adopts centralized storage but also adopts partial storage in the edge node to realize the distributed network-wide storage.

Since the storage mode is different, the scheduling mode changes too. To sum up, for the locally not stored media data, the edge node seamlessly extracts the media data segment from the recording node in a manner of scheduling by degrees.

The media data scheduling process involved in the embodiment is mainly as follows: when the client terminal 104 schedules and requires the media code stream data from the edge node 103, the edge node 103 sends the locally stored media code stream to the client terminal 104; and for the locally not stored media code stream data, the edge 103 schedules and requires the media code stream data requested by the client terminal 104 from the recording node, that is, central node 101 or regional node 102.

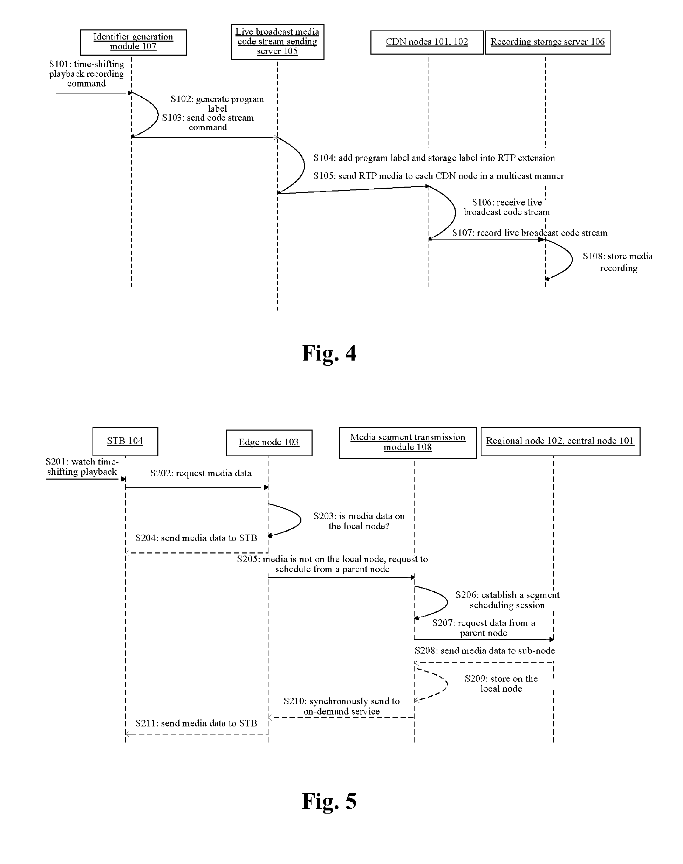

As shown in Fig. 4 and Fig. 5, the storage process and the scheduling process of the media data are illustrated respectively.

Referring to Fig. 4, a flowchart of multicast transmission and time-shifting playback recording of media code stream with program label and storage offset label according to the embodiment is illustrated. The network-wide storing method for IPTV involved in the embodiment specifically comprises the following steps.

S101: an external system transmits a time-shifting playback recording command to this system to trigger an identifier generation module 107 of a live broadcast media code stream sending server 105 to generate a program label and a storage offset label, wherein the live broadcast media code stream sending server 105 sends the live broadcast media code stream to each recording node to record in a multicast manner.

S102: the identifier generation module 107, according to a live program list, generates a program label at the start of the program and generates a new program label when the current program ends and a next program starts; in this way, the program label segments the live broadcast code stream into the media files for storage based on programs.

S103: the identifier generation module 107 transmits the program label to the live broadcast media code stream sending server 105.

S104: the live broadcast media code stream sending server 105, according to the RTP extension domain regulation shown in Fig. 2, constructs a live broadcast media code stream data packet: adding the program label and the storage offset label into the RTP extension domain.

S105: the RTP packet added with the program label and the storage offset label is sent to each node of the CDN network in a multicast manner, wherein the nodes of the CDN network comprise a central node 101, a regional node 102 and an edge node 103.

S106: the recording nodes, that is, the central node 101 and the regional node 102, of the CDN network, receive the multicast media code stream.

S107: a recording storage server 106 of the recording node records the live broadcast code stream data.

S108: the recording storage server 106, according to the RTP extension domain regulation shown in Fig. 2, extracts the program label and the storage offset label in the code stream, and then stores the code stream data into the corresponding offset location of the corresponding program recording file according to the program label and the storage offset label. For the code stream data lost during the transmission process, the recording storage server 106 fills full zero data in the corresponding position of the program recording file. In this way, the storage of the media data on each recording node is aligned, with the same order as the transmission order of the media data in the original live broadcast code stream and the same size as the storage size of the original live broadcast code stream in the condition of not losing packet. Thus the seamless scheduling based on media data segment among any nodes is realized;

Referring to Fig. 5, the scheduling process of the embodiment, that is, the time-shifting playback recording and user watching process, is illustrated. In the embodiment, the network-wide scheduling method for IPTV comprises the following steps.

S201: a user demands to playback a program or enters the live broadcast time-shifting mode at the STB 104.

S202: the STB 104 serving as the client terminal requests the media data from the nearest edge node 103.

S203: the edge node 103 first judges whether the media data requested by the STB 104 is in this node.

S204: if yes, the edge node 103 directly sends the media data to the STB 104.

S205: when the edge node 103 judges that the media data is not in this node, the edge node 103 immediately requests the corresponding media segment from the parent regional node 102 to which the edge node 103 is dependent.

S206: the edge node 103 establishes a session of requesting data from the regional node 102 through a media segment transmission module 108.

S207: the edge node 103 requests the corresponding media segment from the regional node 102 or central node according to the offset of the requested media data in the program file.

S208: the regional node 102, according to a program label provided in the request of the edge node 103, opens the corresponding program recording file of this node and then sends the corresponding media data to the edge node 103 according to the offset of the media segment requested.

S209: the edge node 103 stores the media data sent from the regional node 102 locally.

S210: the media data is sent to the node on-demand service synchronously.

S211: the media data is sent to STB 104 synchronously.

The locally stored media segments scheduled and required from the regional node 102 can continue to serve other users of the regional node 102. These media segments are deleted after being saved in this node for a time period to guarantee that the storage space of this node is not excessively occupied.

The above is detailed illustration of this disclosure in conjunction with specific embodiments. It should not be considered that the specific implementation of this disclosure is limited to the description above. For the person with ordinary skills in the art to which this disclosure belongs, many deductions and replacements can be made without departing from the idea of this disclosure.

## Claims

1. A network-wide storing method for Internet Protocol Television (IPTV) comprising steps of:transmitting (S105), by a live broadcast media code stream sending server of a Content Delivery Network (CDN), a media code stream data packet to a recording node; and
storing, by the recording node, the media code stream data packet as a recording file,
the storing method **characterized by** the step of:
before transmitting (S105), by the live broadcast media code stream sending server of the CDN, the media code stream data packet to the recording node, adding (S104), by the live broadcast media code stream sending server, an identifier of a program to which the media code stream data packet belongs and a storage identifier of the media code stream data packet into the media code stream data packet,
wherein the media code stream data packet is stored as a recording file according to the identifier of the program and the storage identifier;
wherein the identifier of the program is a program label and the storage identifier is a storage offset label; and
wherein storing, by the recording node, the media code stream data packet as a recording file according to the identifier of the program and the storage identifier comprises:
storing, by the recording node, media code stream data from the media code stream data packet which belongs to a program indicated by the program label into corresponding offset location of the recording file, wherein the corresponding offset location is indicated by the storage offset label.

2. The network-wide storing method for IPTV according to claim 1, **characterized in that** the recording node comprises a central node and regional nodes of the CDN; and an edge node of the CDN stores a part of the media code stream data packet.

3. The network-wide storing method for IPTV according to claim 2, **characterized in that** a scheduling method among the edge node which stores the part of the media code stream data packet, a client terminal and the recording node comprises the steps of: requesting (S202), by the client terminal, the media code stream data packet from the edge node; and sending (S204), by the edge node, the locally stored media code stream data packet requested by the client terminal to the client terminal if the edge node locally stores the media code stream data packet requested by the client terminal; otherwise, requesting (S205), by the edge node, the media code stream data packet requested by the client terminal from the recording node.

4. The network-wide storing method for IPTV according to any one of claims 1 to 3, **characterized in that** for a media code stream data packet lost during transmission, the recording node fills full zero data in a corresponding position of the recording file.

5. A network-wide storing system for IPTV comprising:
a recording node (101, 102) and
a live broadcast media code stream sending server (105),
wherein the live broadcast media code stream sending server (105) is configured to transmit a media code stream data packet to the recording node (101, 102); and
the recording node (101, 102) is configured to store the media code stream data packet as a recording file,
the system **characterized in that**:
the live broadcast media code stream sending server (105) is configured to add an identifier of a program to which the media code stream data packet belongs and a storage identifier of the media code stream data packet into the media code stream data packet, and
wherein the recording node (101, 102) is configured to store the media code stream data packet as a recording file according to the identifier of the program to which the media code stream data packet belongs and the storage identifier of the media code stream data packet,
wherein the identifier of the program is a program label and the storage identifier is a storage offset label; and
wherein the recording node (101, 102) is configured to store the media code stream data packet as a recording file by the following steps:
storing media code stream data from the media code stream data packet which belongs to a program indicated by the program label into corresponding offset location of the recording file, wherein the corresponding offset location is indicated by the storage offset label.

6. The network-wide storing system for IPTV according to claim 5, **characterized in that** the recording node comprises a central node (101) and regional nodes (102) of the CDN; the central node (101) and the regional node (102) respectively comprise a recording storage server (106); and an edge node (103) of the CDN stores a part of the media code stream data packet.

7. The network-wide storing system for IPTV according to claim 6, **characterized in that** a scheduling relationship among the edge node (103) which stores the part of the media code stream data packet, a client terminal (104) and the recording node (101, 102) is that: the edge node (103) is configured to send the locally stored media code stream data packet requested by the client terminal (104) to the client terminal (104) in the condition that the edge node (103) locally stores the media code stream data packet requested by the client terminal (104); otherwise, the edge node (103) is configured to request the media code stream data packet requested by the client terminal (104) from the recording node (101, 102).

8. The network-wide storing system for IPTV according to claim 7, **characterized in that** the live broadcast media code stream sending server (105) comprises an identifier generation module, configured to generate the identifier of the program and the storage identifier.

9. The network-wide storing system for IPTV according to claim 8, **characterized in that** the edge node (103) comprises a media segment transmission module (108), configured to locate the media segment.

## Patentansprüche

1. Netzwerkweites Speicherverfahren für Internet-Protokoll-Television (IPTV), umfassend die Schritte: Übertragen (S105) eines Mediencode-Stream-Datenpakets durch einen Live-Broadcast-Mediencode-Stream-Sendeserver eines Content-Delivery-Netzwerks (CDN) an einen Aufnahmeknoten; und
Speichern des Mediencode-Stream-Datenpakets durch den Aufnahmeknoten als eine Aufnahmedatei, wobei
das Speicherverfahren **gekennzeichnet ist durch** den Schritt:
vor dem Übertragen (S105) des Mediencode-Stream-Datenpakets durch den Live-Broadcast-Mediencode-Stream-Sendeservers des CDN an den Aufnahmeknoten, Hinzufügen (S104) eines Bezeichners eines Programms, zu dem das Mediencode-Stream-Datenpaket gehört, und eines Speicherbezeichners des Mediencode-Stream-Datenpakets **durch** den Live-Broadcast-Mediencode-Stream-Sendeserver in das Mediencode-Stream-Datenpaket,
wobei das Mediencode-Stream-Datenpaket gemäß dem Bezeichner des Programms und dem Speicherbezeichner als eine Aufnahmedatei gespeichert wird;
wobei der Bezeichner des Programms ein Programm-Label ist und der Speicherbezeichner ein Speicher-Offset-Label ist; und
wobei das Speichern des Mediencode-Stream-Datenpakets **durch** den Aufnahmeknoten als eine Aufnahmedatei gemäß dem Bezeichner des Programms und des Speicherbezeichners umfasst:
Speichern der Mediencode-Stream-Daten von dem Mediencode-Stream-Datenpaket, das zu einem Programm gehört, das **durch** das Programm-Label angezeigt ist, **durch** den Aufnahmeknoten in einem entsprechenden Offset-Ort der Aufnahmedatei, wobei der entsprechende Offset-Ort **durch** das Speicher-Offset-Label angezeigt wird.

2. Netzwerkweites Speicherverfahren für IPTV nach Anspruch 1, **dadurch gekennzeichnet, dass** der Aufnahmeknoten einen zentralen Knoten und regionale Knoten des CDN umfasst; und ein Kantenknoten des CDN einen Teil des Mediencode-Stream-Datenpakets speichert.

3. Netzwerkweites Speicherverfahren für IPTV nach Anspruch 2, **dadurch gekennzeichnet, dass** ein Planverfahren zwischen dem Kantenknoten, der den Teil des Mediencode-Stream-Datenpakets speichert, einem Client-Terminal und dem Aufnahmeknoten die Schritte umfasst: Anfordern (S202) des Mediencode-Stream-Datenpakets vom Kantenknoten durch das Client-Terminal; und Senden (S204) des lokal gespeicherten Mediencode-Stream-Datenpakets, das von dem Client-Terminal angefordert wurde, durch den Kantenknoten an das Client-Terminal, falls der Kantenknoten das Mediencode-Stream-Datenpaket, das durch das Client-Terminal angefordert wurde, lokal speichert; andernfalls Anfordern (S2015) des Mediencode-Stream-Datenpaktes, das von dem Client-Terminal angefordert wurde, durch den Kantenknoten von dem Aufnahmeknoten.

4. Netzwerkweites Speicherverfahren für IPTV nach einem der Ansprüche 1 bis 3, **dadurch gekennzeichnet, dass** für ein während der Übertragung verlorenes Mediencode-Stream-Datenpaket, der Aufnahmeknoten komplette Null-Daten in einer entsprechenden Position der Aufnahmedatei auffüllt.

5. Netzwerkweites Speichersystem für IPTV, umfassend:
einen Aufnahmeknoten (101, 102) und
einen Live-Broadcast-Mediencode-Stream-Sendeserver (105),
wobei der Live-Broadcast-Mediencode-Stream-Sendeserver (105) ausgebildet ist, ein Mediencode-Stream-Datenpaket an den Aufnahmeknoten (101, 102) zu übertragen; und
der Aufnahmeknoten (101, 102) ausgebildet ist, das Mediencode-Stream-Datenpaket als eine Aufnahmedatei zu speichern, wobei
das System **dadurch gekennzeichnet ist, dass**:
der Live-Broadcast-Mediencode-Stream-Sendeserver (105) ausgebildet ist, einen Bezeichner eines Programms, zu dem das Mediencode-Stream-Datenpaket gehört, und einen Speicherbezeichner des Mediencode-Stream-Datenpakets in das Mediencode-Stream-Datenpaket hinzuzufügen, und
wobei der Aufnahmeknoten (101, 102) ausgebildet ist, das Mediencode-Stream-Datenpaket gemäß dem Bezeichner des Programms, zu dem das Mediencode-Stream-Datenpaket gehört, und dem Speicherbezeichner des Mediencode-Stream-Datenpakets als eine Aufnahmedatei zu speichern,
wobei der Bezeichner des Programms ein Programm-Label ist und der Speicherbezeichner ein Speicher-Offset-Label ist; und
wobei der Aufnahmeknoten (101, 102) ausgebildet ist, das Mediencode-Stream-Datenpaket als eine Aufnahmedatei zu speichern durch die folgenden Schritte:
Speichern von Mediencode-Stream-Daten von dem Mediencode-Stream-Datenpaket, das zu einem Programm gehört, das durch das Programm-Label angezeigt ist, in einem entsprechenden Offset-Ort der Aufnahmedatei, wobei der entsprechende Offset-Ort durch das Speicher-Offset-Label angezeigt wird.

6. Netzwerkweites Speichersystem für IPTV nach Anspruch 5, **dadurch gekennzeichnet, dass** der Aufnahmeknoten einen zentralen Knoten (101) und regionale Knoten (102) des CDN umfasst; wobei der zentrale Knoten (101) und der regionale Knoten (102) jeweils einen Aufnahme-Speicherserver (106) umfassen; und ein Kantenknoten (103) des CDN einen Teil des Mediencode-Stream-Datenpakets speichert.

7. Netzwerkweites Speichersystem für IPTV nach Anspruch 6, **dadurch gekennzeichnet, dass** eine Planbeziehung zwischen dem Kantenknoten (103), der den Teil des Mediencode-Stream-Datenpakets speichert, einem Client-Terminal (104) und dem Aufnahmeknoten (101, 102) derart ausgestaltet ist, dass: der Kantenknoten (103) ausgebildet ist, das lokal gespeicherte Mediencode-Stream-Datenpaket, das durch das Client-Terminal (104) angefordert wurde, an das Client-Terminal (104) zu senden, für den Fall, dass der Kantenknoten (103) das Mediencode-Stream-Datenpaket, das durch das Client-Terminal (104) angefordert wurde, lokal speichert; wobei anderenfalls der Kantenknoten (103) ausgebildet ist, das Mediencode-Stream-Datenpaket, das durch das Client-Terminal (104) angefordert wurde, vom Aufnahmeknoten (101, 102) anzufordern.

8. Netzwerkweites Speichersystem für IPTV nach Anspruch 7, **dadurch gekennzeichnet, dass** der Live-Broadcast-Mediencode-Stream-Sendeserver (105) ein Bezeichner-Erzeugermodul umfasst, das ausgebildet ist, den Bezeichner des Programms und den Speicherbezeichner zu erzeugen.

9. Netzwerkweites Speichersystem für IPTV nach Anspruch 8, **dadurch gekennzeichnet, dass** der Kantenknoten (103) ein Mediensegment-Übertragungsmodul (108) umfasst, das ausgebildet ist, das Mediensegment zu orten.

## Revendications

1. Procédé de stockage sur l'ensemble du réseau pour télévision sur protocole internet (IPTV) comprenant les étapes suivantes :
transmission (S105), par un serveur d'envoi de flux de codes multimédia de retransmission en direct d'un réseau de diffusion de contenu (CDN), d'un paquet de données de flux de codes multimédia à un noeud d'enregistrement ; et
stockage, par le noeud d'enregistrement, du paquet de données de flux de codes multimédia en tant que fichier d'enregistrement,
le procédé de stockage étant **caractérisé par** l'étape suivants :
avant la transmission (S105), par le serveur d'envoi de flux de codes multimédia de retransmission en direct du CDN, du paquet de données de flux de codes multimédia au noeud d'enregistrement, ajout (S104), par le serveur d'envoi de flux de codes multimédia de retransmission en direct, d'un identifiant d'un programme auquel le paquet de données de flux de codes multimédia appartient et d'un identifiant de stockage du paquet de données de flux de codes multimédia dans le paquet de données de flux de codes multimédia,
dans lequel le paquet de données de flux de codes multimédia est stocké en tant que fichier d'enregistrement en fonction de l'identifiant du programme et de l'identifiant de stockage ;
dans lequel l'identifiant du programme est une étiquette de programme et l'identifiant de stockage est une étiquette décalée de stockage; et
dans lequel le stockage, par le noeud d'enregistrement, du paquet de données de flux de codes multimédia en tant que fichier d'enregistrement selon l'identifiant du programme et l'identifiant de stockage comprend :
le stockage, par le noeud d'enregistrement, de données de flux de codes multimédia provenant du paquet de données de flux de codes multimédia qui appartient à un programme indiqué par l'étiquette de programme dans l'emplacement décalé correspondant du fichier d'enregistrement, dans lequel l'emplacement décalé correspondant est indiqué par l'étiquette de stockage décalée.

2. Procédé de stockage sur l'ensemble du réseau pour IPTV selon la revendication 1, **caractérisé en ce que** le noeud d'enregistrement comprend un noeud central et des noeuds régionaux du CDN ; et un noeud périphérique du CDN stocke une partie du paquet de données de flux de codes multimédia.

3. Procédé de stockage sur l'ensemble du réseau pour IPTV selon la revendication 2, **caractérisé en ce qu'**un procédé de planification entre le noeud périphérique qui stocke la partie du paquet de données de flux de codes multimédia, un terminal de client et le noeud d'enregistrement comprend les étapes suivantes :
demande (S202), par le terminal de client, du paquet de données de flux de codes multimédia au noeud périphérique ; et envoi (S204), par le noeud périphérique, du paquet de données de flux de codes multimédia stocké localement demandé par le terminal de client au terminal de client si le noeud périphérique stocke localement le paquet de données de flux de codes multimédia demandé par le terminal de client ; sinon, demande (S205), par le noeud périphérique, du paquet de données de flux de codes multimédia demandé par le terminal de client au noeud d'enregistrement.

4. Procédé de stockage sur l'ensemble du réseau pour IPTV selon l'une quelconque des revendications 1 à 3, **caractérisé en ce que** pour un paquet de données de flux de codes multimédia perdu au cours de la transmission, le noeud d'enregistrement remplit de données nulles une position correspondante du fichier d'enregistrement.

5. Système de stockage sur l'ensemble du réseau pour IPTV, comprenant :
un noeud d'enregistrement (101, 102) et
un serveur d'envoi de flux de codes multimédia de retransmission en direct (105),
dans lequel le serveur d'envoi de flux de codes multimédia de retransmission en direct (105) est configuré pour transmettre un paquet de données de flux de codes multimédia au noeud d'enregistrement (101, 102) ; et
le noeud d'enregistrement (101, 102) est configuré pour stocker le paquet de données de flux de codes multimédia en tant que fichier d'enregistrement,
le système étant **caractérisé en ce que** :
le serveur d'envoi de flux de codes multimédia de retransmission en direct (105) est configuré pour ajouter un identifiant d'un programme auquel le paquet de données de flux de codes multimédia appartient et un identifiant de stockage du paquet de données de flux de codes multimédia dans le paquet de données de flux de codes multimédia, et
dans lequel le noeud d'enregistrement (101, 102) est configuré pour stocker le paquet de données de flux de codes multimédia en tant que fichier d'enregistrement selon l'identifiant du programme auquel le paquet de données de flux de codes multimédia appartient et l'identifiant de stockage du paquet de données de flux de codes multimédia,
dans lequel l'identifiant du programme est une étiquette de programme et l'identifiant de stockage est une étiquette décalée de stockage; et
dans lequel le noeud d'enregistrement (101, 102) est configuré pour stocker le paquet de données de flux de codes multimédia en tant que fichier d'enregistrement en procédant aux étapes suivantes :
stockage des données de flux de codes multimédia provenant du paquet de données de flux de codes multimédia qui appartient à un programme indiqué par l'étiquette de programme dans l'emplacement décalé correspondant du fichier d'enregistrement, dans lequel l'emplacement décalé correspondant est indiqué par l'étiquette de stockage décalée.

6. Système de stockage sur l'ensemble du réseau pour IPTV selon la revendication 5, **caractérisé en ce que** le noeud d'enregistrement comprend un noeud central (101) et des noeuds régionaux (102) du CDN ; le noeud central (101) et le noeud régional (102) comprennent respectivement un server de stockage d'enregistrement (106) ; et un noeud périphérique (103) du CDN stocke une partie du paquet de données de flux de codes multimédia.

7. Système de stockage sur l'ensemble du réseau pour IPTV selon la revendication 6, **caractérisé en ce qu'**une relation de planification entre le noeud périphérique (103) qui stocke la partie du paquet de données de flux de codes multimédia, un terminal de client (104) et le noeud d'enregistrement (101, 102) est que : le noeud périphérique (103) est configuré pour envoyer le paquet de données de flux de codes multimédia stocké localement demandé par le terminal de client (104) au terminal de client (104) à la condition que le noeud périphérique (103) stocke localement le paquet de données de flux de codes multimédia demandé par le terminal de client (104) ; sinon, le noeud périphérique (103) est configuré pour demander le paquet de données de flux de codes multimédia demandé par le terminal de client (104) au noeud d'enregistrement (101, 102).

8. Système de stockage sur l'ensemble du réseau pour IPTV selon la revendication 7, **caractérisé en ce que** le serveur d'envoi de flux de codes multimédia de retransmission en direct (105) comprend un module de génération d'identifiants, configuré pour générer l'identifiant du programme et l'identifiant de stockage.

9. Système de stockage sur l'ensemble du réseau pour IPTV selon la revendication 8, **caractérisé en ce que** le noeud périphérique (103) comprend un module de transmission de segment multimédia (108), configuré pour localiser le segment multimédia.
